(19) Europäisches Patentamt
European Patent Office
Office européen des brevets

(11) **EP 2 980 142 A1**

(12) **EUROPEAN PATENT APPLICATION**
published in accordance with Art. 153(4) EPC

(43) Date of publication:
**03.02.2016 Bulletin 2016/05**

(21) Application number: **14773391.9**

(22) Date of filing: **19.03.2014**

(51) Int Cl.:
*C08J 9/04* (2006.01)    *C08K 3/04* (2006.01)
*C08L 9/02* (2006.01)    *C08L 45/00* (2006.01)

(86) International application number:
**PCT/JP2014/057603**

(87) International publication number:
**WO 2014/156902 (02.10.2014 Gazette 2014/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.03.2013  JP 2013074005**

(71) Applicant: **Sekisui Chemical Co., Ltd.**
**Osaka 530-8565 (JP)**

(72) Inventors:
• YACHI, Koji
  Hasuda-shi
  Saitama 349-0198 (JP)
• ADACHI, Koichi
  Hasuda-shi
  Saitama 349-0198 (JP)

(74) Representative: **Ter Meer Steinmeister & Partner**
**Patentanwälte mbB**
**Nymphenburger Straße 4**
**80335 München (DE)**

(54) **CLOSED-CELL FOAMED RUBBER-BASED RESIN OBJECT**

(57) A rubber-based resin closed-cell foam comprising a rubber-based resin having an acrylonitrile component content of 30% by mass or more, and carbon black contained in the rubber-based resin portion, the carbon black having a total nitrogen adsorption specific surface area of 600 to 2400 m$^2$ per 100 parts by mass of the rubber-based resin.

EP 2 980 142 A1

**Description**

Technical Field

The present invention relates to a rubber-based resin closed-cell foam used as a water-stop sealing material.

Background Art

Currently, in various fields such as construction, electronics, and vehicles, water-stop sealing materials formed of a foam are widely used in order to fill gaps in various structures to prevent the ingress of water. Such a water-stop sealing material is disposed in a compressed state in the gap, which is an adherend portion, and is composed so as to adhere to the interface of the adherend portion without a clearance by resilient stress trying to recover the shape from the compressed state. But, when the compression flexibility of the water-stop sealing material is low, the resilient stress of the water-stop sealing material is so strong that the sealed portion deforms, and therefore the adhesiveness of the water-stop sealing material to the sealed portion decreases, resulting in the problem of insufficient water stop properties.
Therefore, using an open-cell foam having excellent compression flexibility as a sealing material is considered. However, the cells communicate with each other in the open-cell foam, and therefore, water easily passes through the foam. Thus, a problem is that sufficient water stop properties cannot be obtained.
As sealing materials that solve this problem, for example, water-stop sealing materials using rubber-based resin closed-cell foamed sheets having closed cells are described in Patent Literatures 1 and 2.

Citation List

Patent Literature

    PTL1: International Publication No. WO 2007/072885
    PTL2: International Publication No. WO 2011/039877

Summary of Invention

Technical Problem

The rubber-based resin closed-cell foamed sheets described in Patent Literatures 1 and 2 have excellent water stop properties. However, when they are used under high temperature, the dimensions change easily, and a clearance is formed between the sheet and the adherend surface. Thus, sufficient water stop properties cannot be ensured in some cases.
The present invention has been made in view of the above conventional problem and provides a rubber-based resin closed-cell foam that undergoes small dimensional changes and can maintain high water stop properties even when used under high temperature.

Solution to Problem

The gist of the present invention is a rubber-based resin closed-cell foam comprising a rubber-based resin having an acrylonitrile component content of 30% by mass or more, and carbon black contained in the rubber-based resin portion, the carbon black having a total nitrogen adsorption specific surface area of 600 to 2400 $m^2$ per 100 parts by mass of the rubber-based resin.

Advantageous Effects of Invention

According to the present invention, it is possible to provide a rubber-based resin closed-cell foam that undergoes small dimensional changes and can maintain high water stop properties even when used under high temperature.

Description of Embodiment

The rubber-based resin closed-cell foam of the present invention is a rubber-based resin closed-cell foam comprising a rubber-based resin having an acrylonitrile component content of 30% by mass or more, and carbon black contained in the rubber-based resin portion, the carbon black having a total nitrogen adsorption specific surface area of 600 to 2400 m$^2$ per 100 parts by mass of the rubber-based resin. As used herein, the "rubber-based resin closed-cell foam" is sometimes simply referred to as a "foam."

<Rubber-Based Resin>

The rubber-based resin used in the present invention contains 30% by mass or more of an acrylonitrile component. A low acrylonitrile component content is not preferred because the water stop properties of the foam may decrease. In terms of improving the water stop properties of the foam, the acrylonitrile component content of the rubber-based resin is more preferably 30 to 50% by mass, further preferably 35 to 50% by mass.

The rubber-based resin used in the present invention may comprise only an acrylonitrile-butadiene rubber or may be composed of an acrylonitrile-butadiene rubber and a rubber other than the acrylonitrile-butadiene rubber as long as the above amount of the acrylonitrile component is satisfied. However, the rubber-based resin preferably comprises only an acrylonitrile-butadiene rubber.

As the acrylonitrile-butadiene rubber, one having an acrylonitrile component content of 30 to 50% by mass is preferred, and one having an acrylonitrile component content of 35 to 50% by mass is more preferred, in terms of improving the water stop properties of the foam.

When the rubber-based resin is composed of an acrylonitrile-butadiene rubber and a rubber other than the acrylonitrile-butadiene rubber, the acrylonitrile-butadiene rubber content in the rubber-based resin is preferably 80% by mass or more, more preferably 85% by mass or more, and further preferably 90% by mass or more, in terms of improving the water stop properties of the foam.

The rubber other than the acrylonitrile-butadiene rubber constituting the rubber-based resin is not particularly limited as long as it has rubber elasticity at room temperature (20°C). Examples of the rubber include chloroprene rubbers (CR), isoprene rubbers (IR), butyl rubbers (IIR), natural rubbers (NR), styrenebutadiene copolymerized rubbers (SBR), butadiene rubbers (BR), ethylene propylene rubbers (EPDM), urethane rubbers, fluororubbers, acrylic rubbers, and silicone rubbers. One of these may be used alone, or two or more of these may be used in combination.

The rubber-based resin in the present invention may contain a liquid synthetic rubber under the conditions of 20°C and 1 atmosphere (1.01 × 10$^{-1}$ MPa) (hereinafter also referred to as a "liquid rubber").

When the rubber-based resin contains a liquid rubber, the kneading load during production can be reduced.

The liquid rubber refers to a synthetic rubber having fluidity under the conditions of 20°C and 1 atmosphere (1.01 × 10$^{-1}$ MPa). Examples thereof include liquid acrylonitrile-based rubbers such as liquid acrylonitrile-butadiene rubbers (liquid NBR), liquid hydrogenated acrylonitrile-butadiene rubbers (liquid HNBR), liquid carboxylated acrylonitrile-butadiene rubbers (liquid XNBR), liquid acrylonitrile-butadiene-isoprene rubbers (liquid NBIR), liquid acrylonitrileisoprene rubbers (liquid NIR), and liquid ternary copolymers of acrylonitrile, butadiene, and functional monomers having an anti-aging function and the like; liquid chloroprene rubbers (liquid CR), liquid isoprene rubbers (liquid IR), and liquid butyl rubbers (liquid IIR). One of these may be used alone, or two or more of these may be used in combination.

Among these, in terms of improving the water stop properties of the foam, liquid acrylonitrile-based rubbers are preferred, and liquid acrylonitrile-butadiene rubbers (liquid NBR) are more preferred. The acrylonitrile component content in a liquid acrylonitrile-butadiene rubber (liquid NBR) is not limited.

<Carbon Black>

In the present invention, carbon black is contained in the above rubber-based resin portion and the carbon black is contained so that the total nitrogen adsorption specific surface area of the carbon black is 600 to 2400 m$^2$ per 100 parts by mass of the rubber-based resin. When the total nitrogen adsorption specific surface area of the carbon black is less than 600 m$^2$ per 100 parts by mass of the rubber-based resin, the dimensional change rate of the foam cannot be kept low. When the total nitrogen adsorption specific surface area is more than 2400 m$^2$, the foamable resin composition foams abnormally during production, and a foam cannot be obtained.

The total nitrogen adsorption specific surface area of the carbon black is 600 to 2400 m$^2$, preferably 600 to 2300 m$^2$, more preferably 700 to 2300 m$^2$, further preferably 700 to 2200 m$^2$, still further preferably 800 to 2200 m$^2$, still further preferably 900 to 2200 m$^2$, still further preferably 1000 to 2200 m$^2$, and still further preferably 1100 to 2200 m$^2$, per 100 parts by mass of the rubber-based resin, in terms of thermally stabilizing and reinforcing the rubber-based resin and keeping the dimensional change rate of the foam low.

As used herein, the nitrogen adsorption specific surface area refers to a value measured according to JIS K 6217-2: 2001.

Examples of the carbon black that can be used in the present invention include HAF (nitrogen adsorption specific surface area: 75 to 80 m$^2$/g), HS-HAF (nitrogen adsorption specific surface area: 78 to 83 m$^2$/g), LS-HAF (nitrogen adsorption specific surface area: 80 to 85 m$^2$/g), LI-HAF (nitrogen adsorption specific surface area: 73 to 75

m$^2$/g), IISAF (nitrogen adsorption specific surface area: 97 to 98 m$^2$/g), HS-IISAF (nitrogen adsorption specific surface area: 98 to 99 m$^2$/g), and ISAF (nitrogen adsorption specific surface area: 110 to 125 m$^2$/g).

<Tackifying Resin>

The rubber-based resin closed-cell foam of the present invention preferably contains 1 to 20 parts by mass of a tackifying resin having a glass transition temperature of 40°C or more based on 100 parts by mass of the rubber-based resin in terms of keeping the dimensional changes small even in the case of use under high temperature and increasing the adhesiveness to an adherend portion to maintain high water stop properties.

The glass transition temperature of the tackifying resin is preferably 40 to 90°C, more preferably 40 to 70°C, further preferably 45 to 65°C, and still further preferably 50 to 60°C, in terms of keeping the dimensional change rate of the foam low.

As the tackifying resin that can be used in the present invention, petroleum-based resins, terpene-based resins, alkylphenol resins, xylene resins, rosin-based resins, and the like are used.

Examples of the petroleum-based resins include C5-based petroleum resins, C9-based petroleum resins, C5-C9 copolymerized petroleum resins, coumarone resins, coumarone-indene-based resins, pure monomer resins, dicyclopentadiene-based petroleum resins, and hydrides thereof.

Examples of the terpene-based resins include terpene polymers, β-pinene polymers, terpene phenol resins, and aromatic modified terpene polymers.

Examples of the alkylphenol resins and the xylene resins include alkylphenol-modified xylene resins and rosin-modified xylene resins.

The rosin-based resins refer to rosins and rosin derivatives. The rosins are gum rosins, wood rosins, and tall oil rosins. Examples of the rosin derivatives include the forms of polymerized rosins, disproportionated rosins, hydrogenated rosins, reinforced rosins, rosin esters, polymerized rosin esters, and rosin phenols. As polyhydric alcohols used for esterification, ethylene glycol, diethylene glycol, glycerin, pentaerythritol, and the like can be used.

The tackifying resin content is preferably 1 to 20 parts by mass, more preferably 2 to 15 parts by mass, and further preferably 2.5 to 9 parts by mass, based on 100 parts by mass of the rubber-based resin in terms of keeping the dimensional change rate of the foam low and at the same time maintaining the foamability of the resin composition.

<Heat Dimensional Change Rate>

The rubber-based resin closed-cell foam of the present invention contains carbon black having a particular nitrogen adsorption specific surface area, and therefore, the heat dimensional change rate can be kept low. Specifically, the heat dimensional change rate can be kept to -7 to 0%, preferably -6 to 0%.

As used herein, the heat dimensional change rate is a value obtained by calculating, in terms of a volume change rate, the total change rate of the dimensional change rates of length, width, and thickness measured at a measurement temperature of 70°C according to JIS K 6767.

<Apparent Density of Foam>

The apparent density of the foam is preferably 20 to 75 kg/m$^3$, more preferably 25 to 55 kg/m$^3$, in terms of improving the flexibility of the foam.

<Thickness of Foam>

The thickness of the foam sheet is appropriately selected according to the use application and is not particularly limited, but is usually preferably 1 to 15 mm, more preferably 2 to 10 mm. When the thickness is less than 1 mm, the foam is too soft and cannot be handled. When the thickness is more than 15 mm, the foam is heavy in terms of weight, and deformation occurs easily.

<Closed Cells of Foam>

The rubber-based resin closed-cell foam of the present invention preferably has a closed cell ratio of 70% or more, and open cells may be included in some of the cells. In the present invention, when the closed cell ratio of the foam is preferably 70 to 100%, more preferably 80 to 100%, further preferably 85 to 100%, and still further preferably 90 to 100%, sufficient water stop properties can be obtained.

The closed cell ratio in the present invention refers to one measured by the following procedure.

First, a test piece having a planar square shape having a side of 5 cm and having a certain thickness is cut from the foam. Then, the thickness of the test piece is measured to calculate the apparent volume of the test piece $V_1$, and the weight of the test piece $W_1$ is measured.

Next, the volume of the cells $V_2$ is calculated based on the following formula. The density of the resin constituting the test piece is $\rho$ g/cm$^3$.

$$\text{the volume of the cells } V_2 = V_1 - W_1/\rho$$

Next, the test piece is sunk in distilled water at 23°C at a depth of 100 mm from the water surface, and a pressure of 15 kPa is applied to the test piece over 3 minutes. Then, the test piece is taken out of the water, moisture attached to the surface of the test piece is removed, the weight of the test piece W2 is measured, and the open cell ratio $F_1$ and the closed cell ratio $F_2$ are calculated based on the following formulas.

$$\text{the open cell ratio } F_1 \, (\%) = 100 \times (W_2 - W_1)/V_2$$

$$\text{the closed cell ratio } F_2 \, (\%) = 100 - F_1$$

<Additives>

The rubber-based resin closed-cell foam may comprise additives. Examples of the additives include flame retardants, antioxidants, fillers other than the above carbon black, pigments, colorants, fungicides, foaming aids, and flame-retardant aids.

Examples of the flame retardants include metal hydroxides such as aluminum hydroxide and magnesium hydroxide as well as bromine-based flame retardants such as decabromodiphenyl ether and phosphorus-based flame retardants such as ammonium polyphosphate.

Examples of the antioxidants include phenolic antioxidants and sulfur-based antioxidants.

Examples of the fillers include talc, calcium carbonate, bentonite, fumed silica, aluminum silicate, acetylene black, and aluminum powders.

One of these additives may be used alone, or two or more of these additives may be used in combination.

<Method for Producing Rubber-Based Resin Closed-Cell Foam>

The method for producing the rubber-based resin closed-cell foam of the present invention is not particularly limited, but the rubber-based resin closed-cell foam of the present invention is preferably produced by a method of molding into a sheet shape a foamable resin composition obtained by kneading a rubber-based resin, a tackifying resin, additives, and a foaming agent, to prepare a foamable resin sheet; then crosslinking the foamable resin sheet by ionizing radiation or the like; and then passing the foamable resin sheet through a heating furnace to foam it.

[Method for Producing Foamable Resin Sheet]

Examples of the method for producing a foamable resin sheet include a method for producing a foamable resin sheet by kneading a foamable resin composition using a kneading machine such as a Banbury mixer or a pressure kneader, and then continuously extruding the foamable resin composition by an extruder, a calender, conveyor belt casting, or the like.

[Method for Crosslinking Foamable Resin Sheet]

Next, examples of the method for crosslinking the foamable resin sheet include crosslinking by ionizing radiation, crosslinking by sulfur or a sulfur compound, and crosslinking by an organic peroxide.

When the foamable resin sheet is crosslinked by ionizing radiation, examples of the ionizing radiation include light, y rays, and electron beams. The dose of the ionizing radiation is preferably 0.5 to 10 Mrad, more preferably 0.7 to 5.0 Mrad.

When crosslinking is performed by ionizing radiation, a sheet of a rubber-based resin closed-cell foam having uniform cells having a small diameter can be obtained. Such a sheet of a rubber-based resin closed-cell foam having uniform cells having a small diameter has a smooth surface, a large contact area with an adherend surface, and improved adhesiveness, and therefore has excellent water stop properties.

When the foamable resin sheet is crosslinked by an organic peroxide, examples of the organic peroxide include diisopropylbenzene hydroperoxide, 2,4-dichlorobenzoyl peroxide, benzoyl peroxide, t-butyl perbenzoate, cumyl hydroperoxide, t-butyl hydroperoxide, 1,1-di(t-butylperoxy)-3,3,5-trimethylhexane, n-butyl-4,4-di(t-butylperoxy)valerate, $\alpha,\alpha'$-bis(t-butylperoxyisopropyl)benzene, 2,5-dimethyl-2,5-di(t-butylperoxy)hexyne-3, and t-butylperoxycumene.

The amount of the organic peroxide blended is preferably 0.05 to 10 parts by mass, more preferably 0.1 to 7 parts by mass, based on 100 parts by mass of the rubber-based resin.

[Method for Foaming Foamable Resin Sheet]

Examples of the method for foaming the foamable resin sheet can include a batch method using an oven or the like and a continuous foaming method in which the foamable resin sheet is formed into a long sheet shape and continuously passed through a heating furnace.

As the foaming agent, a thermally decomposable foaming agent that decomposes by heat to generate a gas is preferred. Examples of the thermally decomposable foaming agent include azodicarbonamide, benzenesulfonyl hydrazide, dinitrosopentamethylenetetramine, toluenesulfonyl hydrazide, and 4,4-oxybis(benzenesulfonyl hydrazide). One of these may be used alone, or two or more of these may be used in combination.

The amount of the thermally decomposable foaming agent blended is preferably 1 to 30 parts by mass, more preferably 3 to 25 parts by mass, and further preferably 5 to 20 parts by mass, based on 100 parts by mass of the rubber-based resin. When the amount of the thermally decomposable foaming agent blended is too small, the expansion ratio does not increase, and the apparent density increases, and the resilience may increase. When the amount of the thermally decomposable foaming agent blended is too large, due to a decrease in apparent density, the compression set increases, and the shape recovery properties of the crosslinked and foamed rubber decrease, and as a result, the water stop properties over a long period cannot be maintained in some cases.

Examples

The present invention will be described in more detail by Examples, but the present invention is not limited in any way by these examples.

The materials used in the following Examples and Comparative Examples are as follows.

- Acrylonitrile-butadiene rubber (NBR)
  manufactured by ZEON Corporation, trade name "Nipol DL101L," density: 1.00 g/cm$^3$ (solid)
  acrylonitrile component content: 42.5% by mass
- Carbon black (1)
  manufactured by Asahi Carbon Co., Ltd., "SRF-HS"
  nitrogen specific surface area: 23 m$^2$/g
- Carbon black (2)
  manufactured by Asahi Carbon Co., Ltd., "HAF"
  nitrogen specific surface area: 77 m$^2$/g
- Carbon black (3)
  manufactured by Asahi Carbon Co., Ltd., "ISAF"
  nitrogen specific surface area: 115 m$^2$/g
- Carbon black (4)
  manufactured by Asahi Carbon Co., Ltd., "MT"
  nitrogen specific surface area: 12 m$^2$/g
- Tackifying resin
  manufactured by Arakawa Chemical Industries, Ltd., trade name "PINECRYSTAL; D-6011"
- Foaming agent
  azodicarbonamide
  manufactured by Otsuka Chemical Co., Ltd., trade name "SO-L," decomposition temperature: 197°C
- Phenolic antioxidant (powdery)
  manufactured by BASF, trade name "IRGANOX 1010"

<Examples 1 to 7 and Comparative Examples 1 to 6>

Example 1

Components were blended according to the description in Table 1 and kneaded by a pressure kneader. Next, this foamable resin composition was fed to an extruder and melted and kneaded, and then, the foamable resin composition in a molten state was extruded from the extruder at an extrusion rate of 50 kg/h to produce a foamable resin sheet having a thickness of 1.6 mm. Next, both surfaces of the foamable resin sheet were irradiated with 1.5 Mrad of ionizing radiation at an acceleration voltage of 480 keV to crosslink the foamable resin sheet.

Then, the foamable resin sheet was fed into a foaming furnace and heated at 270°C to foam the foamable resin sheet to obtain a rubber-based resin closed-cell foam. The following evaluation was performed on this rubber-based resin closed-cell foam. The result is shown in Table 1.

Examples 2 to 7 and Comparative Examples 1 to 6

A rubber-based resin closed-cell foam was produced as in Example 1 except that the blend was changed as described in Table 1, and the following evaluation was performed. The result is shown in Table 1.

<Evaluation: Heat Dimensional Change Rate>

Measurement was performed at a measurement temperature of 70°C according to JIS K 6767, and the total change rate of the dimensional change rates of the length, width, and thickness of the foam was calculated in terms of a volume change rate.

[Table 1]

| | | Examples | | | | | | | Comparative Examples | | | | | |
|---|---|---|---|---|---|---|---|---|---|---|---|---|---|---|
| | | 1 | 2 | 3 | 4 | 5 | 6 | 7 | 1 | 2 | 3 | 4 | 5 | 6 |
| Blend [parts by mass] | NBR | 100 | 100 | 100 | 100 | 100 | 100 | 100 | 100 | 100 | 100 | 100 | 100 | 100 |
| | Foaming agent | 19 | 19 | 19 | 19 | 19 | 19 | 19 | 19 | 19 | 19 | 19 | 19 | 19 |
| | Phenolic antioxidant | 0.1 | 0.1 | 0.1 | 0.1 | 0.1 | 0.1 | 0.1 | 0.1 | 0.1 | 0.1 | 0.1 | 0.1 | 0.1 |
| | Carbon black (1) SRF-HS | 30 | | | | | | | | | | 20 | | |
| | Carbon black (2) HAF | | 20 | | | 20 | | | 3 | | | | 40 | |
| | Carbon black (3) ISAF | | | 10 | 20 | | 20 | 20 | | | | | | 30 |
| | Carbon black (4) MT | | | | | | | | | 20 | 30 | | | |
| | Tackifying resin | | | | | 6 | 6 | 2 | | | | | | |
| Total nitrogen adsorption specific surface area [m²]*1 | | 690 | 1540 | 1150 | 2300 | 1540 | 2300 | 2300 | 231 | 240 | 360 | 460 | 3080 | 3450 |
| Evaluation | Apparent density [kg/m³] | 40.5 | 39.8 | 39.5 | 39.6 | 38.8 | 39.0 | 40.2 | 38.1 | 37.8 | 38.9 | 37.6 | Abnormal foaming | Abnormal foaming |
| | Heat dimensional change rate [%] | -4.5 | -5.2 | -6.2 | -4.6 | -3.2 | -3.0 | -4.0 | -9.0 | -8.5 | -7.3 | -8.0 | Un-measurable | Un-measurable |

*1: the total nitrogen adsorption specific surface area of carbon black per 100 parts by mass of the rubber-based resin

As is clear from the results in Table 1, it is seen that the rubber-based resin closed-cell foams of the present invention undergo small dimensional changes even when used under high temperature.

**Claims**

1. A rubber-based resin closed-cell foam comprising a rubber-based resin having an acrylonitrile component content of 30% by mass or more, and carbon black contained in the rubber-based resin portion, the carbon black having a total nitrogen adsorption specific surface area of 600 to 2400 $m^2$ per 100 parts by mass of the rubber-based resin.

2. The rubber-based resin closed-cell foam according to claim 1 further comprising 1 to 20 parts by mass of a tackifying resin having a glass transition temperature of 40°C or more based on 100 parts by mass of the rubber-based resin.

3. The rubber-based resin closed-cell foam according to claim 1 or 2, wherein the rubber-based resin is an acrylonitrile-butadiene rubber.

4. The rubber-based resin closed-cell foam according to claim 3, wherein an acrylonitrile component content of the acrylonitrile-butadiene rubber is 30 to 50% by mass.

5. The rubber-based resin closed-cell foam according to any of claims 1 to 4 having an apparent density of 20 to 75 kg/m$^3$.

6. The rubber-based resin closed-cell foam according to any of claims 1 to 5 having a closed cell ratio of 70 to 100%.

## INTERNATIONAL SEARCH REPORT

| International application No. |
| --- |
| PCT/JP2014/057603 |

**A. CLASSIFICATION OF SUBJECT MATTER**
*C08J9/04*(2006.01)i, *C08K3/04*(2006.01)i, *C08L9/02*(2006.01)i, *C08L45/00*(2006.01)i

According to International Patent Classification (IPC) or to both national classification and IPC

**B. FIELDS SEARCHED**

Minimum documentation searched (classification system followed by classification symbols)
C08J9/04, C08K3/04, C08L9/02, C08L45/00

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | WO 2008/153083 A1 (Sekisui Chemical Co., Ltd.), 18 December 2008 (18.12.2008), claims 2, 5, 6; paragraphs [0001], [0013], [0055]; table 3<br>& US 2010/0105791 A1 & EP 2159254 A1<br>& KR 10-2010-0017746 A | 1,3,5,6<br>2,4 |
| X<br>Y | WO 1999/11696 A1 (Nippon Zeon Co., Ltd.), 11 March 1999 (11.03.1999), claims 2, 3; page 2, lines 1 to 13, 18 to 24; page 4, lines 12 to 15; examples 1 to 6; table 1; "Industrial Applicability"<br>& EP 1029887 A1 | 1,3,4,5,6<br>2,4 |

☒ Further documents are listed in the continuation of Box C.   ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    11 June, 2014 (11.06.14) | Date of mailing of the international search report<br>    24 June, 2014 (24.06.14) |
| --- | --- |
| Name and mailing address of the ISA/<br>    Japanese Patent Office | Authorized officer |
| Facsimile No. | Telephone No. |

Form PCT/ISA/210 (second sheet) (July 2009)

9

**INTERNATIONAL SEARCH REPORT**

International application No.

PCT/JP2014/057603

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2012-214624 A  (Sekisui Chemical Co., Ltd.), 08 November 2012 (08.11.2012), claims 2, 3, 7, 9, 11; paragraphs [0017], [0063], [0070], [0071] (Family: none) | 2 |
| A | JP 11-49896 A  (Tokai Rubber Industries, Ltd.), 23 February 1999 (23.02.1999), claim 1; paragraphs [0014], [0021], [0029] (Family: none) | 1-6 |
| A | JP 2013-503226 A  (Lanxess Deutschland GmbH), 31 January 2013 (31.01.2013), claims 7, 17; paragraphs [0072], [0160], [0162], [0180] & US 2012/0329941 A1    & US 2013/0029069 A1 & EP 2289623 A1          & WO 2011/023771 A1 & WO 2011/023763 A1 | 1-6 |
| A | WO 2011/039877 A1  (Sekisui Chemical Co., Ltd.), 07 April 2011 (07.04.2011), claim 1; paragraphs [0012], [0013], [0014], [0027], [0028], [0034] & US 2012/0232179 A1    & EP 2484718 A1 | 1-6 |
| A | WO 2007/072885 A1  (Sekisui Chemical Co., Ltd.), 28 June 2007 (28.06.2007), claims 6, 10; paragraphs [0049], [0066], [0097] & US 2009/0169860 A1    & EP 1970403 A1 | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007072885 A

- WO 2011039877 A